# EUROPÄISCHE PATENTSCHRIFT

(11) **EP 0 683 001 B1**
(45) Veröffentlichungstag und Bekanntmachung des Hinweises auf die Patenterteilung: **16.06.1999**
(21) Anmeldenummer: 95250082.5
(22) Anmeldetag: 05.04.1995
(51) Int. Cl.: B23C 3/02, B23Q 27/00

(54) **Verfahren und Vorrichtung zum spanenden Bearbeiten von Stangen, Rohren oder Rohrluppen**
Method and device to cut rods, tubes and tube ends
Méthode et dispositif à usiner des barres, tubes ou bouts de tube

(30) Priorität: 10.05.1994 DE 4416771
(43) Veröffentlichungstag der Anmeldung: 22.11.1995
(73) Patentinhaber: MANNESMANN Aktiengesellschaft, 40213 Düsseldorf (DE)
(72) Erfinder: Esser, Karl-Josef, D-41179 Mönchengladbach (DE)
(74) Vertreter: Meissner, Peter E., Dipl.-Ing.

(56) Entgegenhaltungen:
- DE-A- 2 741 112
- DE-A- 3 006 645
- DE-A- 3 445 004
- DE-A- 4 137 923
- FR-A- 810 743

## Beschreibung

Die Erfindung betrifft ein Verfahren und eine Vorrichtung zum spanenden Bearbeiten von stranggegossenen Kupferluppen, bei dem bzw. der das zu bearbeitende Werkstück in der Querebene der Zerspanung abgestützt an seinem Umfang und auf seiner Länge gefräst wird, während das Werkzeug und das Werkstück relativ zueinander kontinuierlich in Längsrichtung des Werkstuckes bewegt werden, gemäß Oberbegriff der Patentansprüche 1 bzw. 4, Siehe FR-A 810 743.

Es ist bekannt, als Vormaterial für Stangen oder Rohre stranggegossene oder schräggewalzte Blöcke bzw. Hohlblöcke einzusetzen, die vor der Weiterverarbeitung an ihren Oberflächen bearbeitet werden müssen. Werden zum Beispiel Hohlblöcke (Luppen) aus Kupfer Kaltpilgerwalz- oder Ziehanlagen zugeleitet, so muß der auf der Hohlblockaußenoberfläche befindliche Zunder entfernt werden, weil dieser sonst in das Produkt eingedrückt wird und die Qualität des Fertigproduktes erheblich vermindert.

Es ist bekannt, Hohlblöcke vor der Weiterverarbeitung zu Rohren durch Beizen, Schaben, Fräsen oder Schälen zu säubern, wobei in allen Fällen mehr oder weniger viel Material von der Oberfläche entfernt wird. Die geringste Verminderung der Oberfläche tritt beim Beizen auf, allerdings verbleibt eine rauhe Oberfläche, die bei der Weiterverarbeitung, beispielsweise durch Schaben, zunächst vorverformt werden muß. Dadurch wird der Hohlblock relativ dünnwandig. Als günstiges Verfahren zur Bearbeitung der Oberfläche von Stangen, Rohren oder Rohrluppen hat sich das Fräsen der Oberfläche erwiesen, was im allgemeinen als Wirbelfräsen mit umlaufendem Fräswerkzeug oder Längsfräsen mit mehreren Fräswerkzeugen bekannt ist. Während beim Wirbelfräsen das Fräswerkzeug in einer senkrechten Ebene exzentrisch um das zu fräsende Werkstück umläuft, werden zum Längsfräsen Formfräswerkzeuge eingesetzt, die dem Rußenumfang des Werkstückes angepaßt, Oberflächenbereiche in Längsrichtung bearbeiten und in der Regel ein mehrfaches Fräsen nebeneinanderliegender Umfangsbereiche erforderlich machen.

Bei beiden Fräsverfahren müssen die zu fräsenden Werkstücke sicher gegen die beim Fräsen auftretenden Querkräfte abgestützt werden, denn insbesondere bei langen Rundquerschnitten, wie z. B. gegossenen Kupferluppen können die Querkräfte zum Verbiegen der Kupferluppen führen, was wiederum zu schlechten Wanddickentoleranzen führen kann.

Nachteilig ist, daß beide Fräsverfahren relativ langsam sind; die verlangten hohen Vorschübe lassen sich verfahrensgemäß beim Wirbel fräsen in einer Ebene nicht erreichen. Beim Längsfräsen, das zwar mit hohen Vorschüben möglich ist, geht aber Zeit dadurch verloren, daß die Länge des Werkstückes mehrfach an verschiedenen Umfangsbereichen bearbeitet werden muß. Wird mit mehreren Fräsen am Umfang gearbeitet, so läßt sich die Leistung zwar erhöhen, doch erhöhen sich auch die Maschinen- und Werkzeugkosten erheblich. Insbesondere bei sehr langen Werkstücken treten hohe Kräfte in der Werkzeuglängsachse auf.

Ziel der vorliegenden Erfindung ist es, lange Rundquerschnitte, wie z. B. gegossene Kupferluppen toleranzhaltig mit extrem hohen Vorschubgeschwindigkeiten und Oberflächengüten außen zu bearbeiten, wobei automatisierbare Anlagen einsetzbar sein sollen. Auch labile lange Werkstücke sollen ohne Verformung gefräst werden können.

Zur Lösung der Aufgabe wird ein Verfahren mit den Merkmalen von Patentanspruch 1 vorgeschlagen. Die Erfindung besteht also darin, mit einem Werkzeug gleichzeitig an zwei gegenüberliegenden Umfangsbereichen des Werkstückes eine Fräsbearbeitung vorzunehmen, wobei die an gegenüberliegenden Seiten eingeleiteten Zerspanungskräfte, die in Querrichtung zum Werkstück wirken, gegeneinander aufgehoben werden, und daß zwei unmittelbar nebeneinander in zwei verschiedenen Ebenen konzentrisch um das Werkstück umlaufende Werkzeuge, die beiden Ebenen in um 90 Grad zueinander versetzten Richtungen zur gemeinsamen Werkstücklängsachse geneigt angeordnet sind.

Mit nur zwei Werkzeugen läßt sich durch den Vorschlag der Erfindung der gesamte Außenumfang des Werkstücks spanend bearbeiten, wobei durch die leichte Neigung der Werkzeugebenen und den Versatz der Neigungsrichtungen um 90 Grad ein Polygonquerschnitt entsteht, der aus vier jeweils paarweise gegenüberliegenden elliptischen Bögen besteht. Die beiden Werkzeuge erlauben sehr hohe Vorschubgeschwindigkeiten bei nur einmaliger Bearbeitung einer Werkstücklänge und bei gleichzeitiger Bearbeitung von vier aneinander grenzenden Umfangsbereichen des Werkstückes.

Wenn nach einem weiteren Verfahrensmerkmal der Erfindung vorgesehen ist, daß die Werkzeuge in entgegengesetzten Richtungen um die Werkstücklängsachse umlaufen, so ergibt sich eine Neutralisation sowohl der in Umfangsrichtung wirkenden Zerspankräfte, als auch der in Querrichtung zum Werkstück wirkenden Kräfte von selbst. Die verbleibenden Vorschubkräfte in Längsrichtung des Werkstückes sind gering.

Eine erfindungsgemäße Vorrichtung zur Durchführung des Verfahrens besitzt die Merkmale von Patentanspruch 3.

Bei nur geringfügig größerem Innendurchmesser zwischen den Werkzeugschneiden als der Außendurchmesser des zu fräsenden Werkstückes ergibt sich bei geneigtem Werkzeug die vorstehend beschriebene polygonartige Querschnittsform, die umso mehr einem Kreisquerschnitt angenähert ist, je geringer die Neigung des Werkzeuges zur Werkstücklängsachse ist.

Vorzugsweise ist die Neigung des Werkzeuges fest eingestellt, während der Innendurchmesser einstellbar ist. Auf diese Weise läßt sich eine einerseits stabile Maschinenkonstruktion mit der Möglichkeit vereinigen, durch die Einstellung der Schneiden des Innenfräsers den zu bearbeitenden Außendurchmesser zu variieren. Bei genauer Einstellung der Werkzeuge zur Längsachse des Werkstückes und exakt eingestellten Fräserdurchmessern an den Werkzeugköpfen können hohe Genauigkeiten der Wanddicken erzielt werden.

Um die Genauigkeit der Bearbeitung zu garantieren ist nach einem weiteren Merkmal der Erfindung vorgesehen, daß das auf Führungsrollen aufliegende Werkstück beidseitig der Werkzeuge stirnseitig drehfest und axial mittels Klemm- und Haltestangen fixierbar ist. Dabei ist darauf zu achten, daß die Führungen möglichst dicht an die Werkzeuge reichen und auch die Werkzeuge möglichst dicht nebeneinander umlaufen. Die Klemm- und Haltestangen übernehmen gleichzeitig die Werkstückführung vor der Bearbeitung in die Maschine.

Nach einem anderen Merkmal der Erfindung ist vorgesehen, daß mindestens die Einlaufseite des Werkstückes in die Werkzeuge als Führungsbüchse für das Werkstück ausgebildet ist, deren selbsttätig spielfrei einstellbare Führungen das Werkstück zentrisch führen. Eine solche Führungsbüchse stellt den exakt zentrischen Einlauf der Stangen, Rohre oder Rohrluppen sicher und trägt dadurch dazu bei, die notwendigen Toleranzen einzuhalten.

Im Rahmen der Erfindung ist es gleichbedeutend denkbar, daß die aus den Werkzeugen und den Führungen für das Werkstück bestehende Fräseinheit gegenüber dem Werkstück in Längsrichtung ebenso verfahrbar ist, wie das Werkstück gegenüber den Werkzeugen.

Die Vorteile der vorliegenden Erfindung sind darin zu sehen, daß mit nur zwei Fräsern eine gegenüber dem Stand der Technik ungewöhnliche Steigerung der Vorschubleistung bei kompakter Bauweise der Maschine erzielbar ist. Kurze Abstützlängen zwischen den Führungsrollen und die kräfteneutrale Verfahrensweise ermöglichen eine besonders toleranzhaltige Bearbeitung der Werkstückoberflächen, so daß insgesamt eine kompakte, stabile und kostengüntige Lösung geschaffen wurde.

Ein Ausführungsbeispiel der Erfindung ist in der Zeichnung dargestellt und wird nachfolgend beschrieben. Es zeigt:
- Fig. 1: eine Seitenansicht einer Fräsvorrichtung zur Ausführung des erfindungsgemäßen Verfahrens,
- Fig. 2: eine vergrößtere Darstellung der Fräswerkzeuge und
- Fig. 3: die Klemm- und Haltestangen zum Halten des Werkstückes.

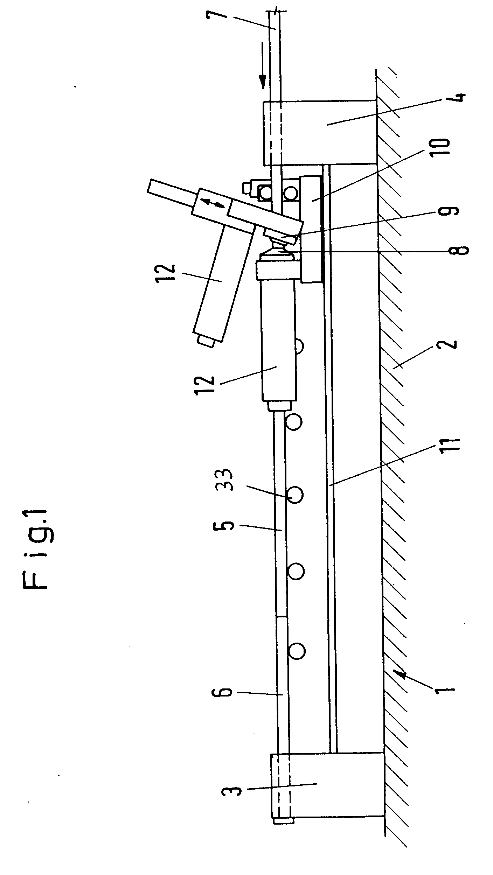

Die Zeichnungsfiguren sind vereinfachte Darstellungen einer erfindungsgemäßen Vorrichtung, die dazu dienen sollen, das Prinzip zu erkennen. In Figur 1 ist mit 1 eine auf dem Fundament 2 angeordnete Fräsmaschine bezeichnet, die zwischen zwei seitlichen Holmen 3 und 4 das zu bearbeitende Werkstück 5 aufnimmt, welches zwischen zwei Klemm- und Haltestangen 6 und 7, die später noch näher beschrieben werden, eingespannt und gehalten ist. Das Werkstück 5 liegt, wie die Klemm- und Haltestange 6 auf Führungsrollen 33 auf, die eine Durchbiegung zwischen den Einspannenden verhindern.

Die Bearbeitung des Werkstückes 5 erfolgt durch die Werkzeuge 8 und 9, die auf einem Werkzeugträgerschlitten 10 angeordnet sind, welcher seinerseits auf der Führungsbahn 11 in Werkstücklängsrichtung kontinuierlich verfahrbar ist. Die Werkzeuge 8, 9 sind in erfindungsgemäßer Weise geneigt angeordnet und über nicht näher beschriebene Antriebe 12 drehangetrieben.

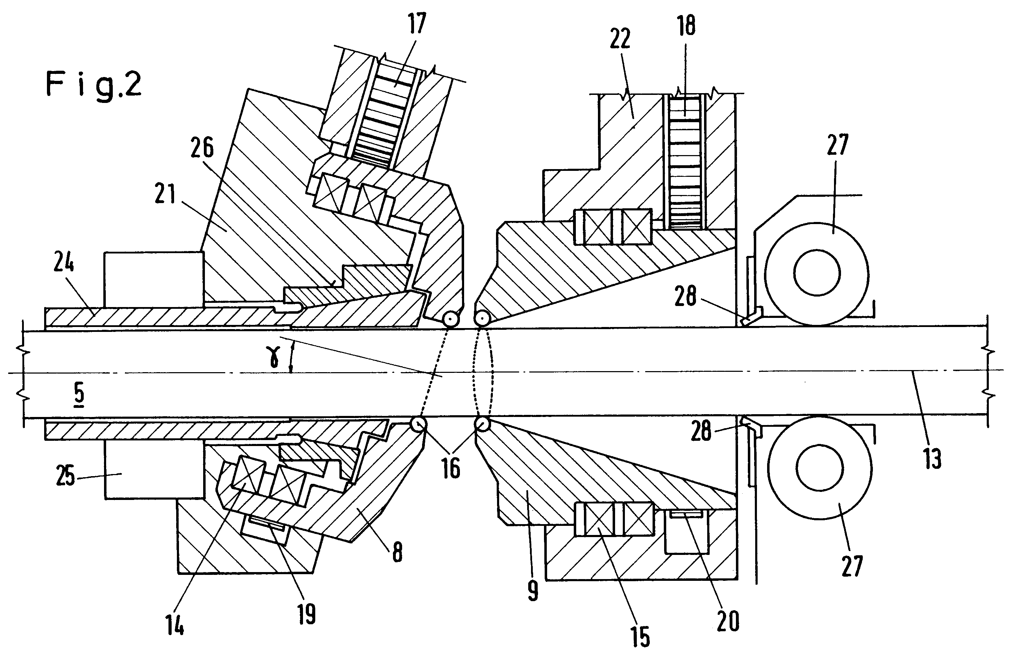

Figur 2 stellt - ebenfalls grob schematisch - eine Draufsicht auf die Werkzeuge 8, 9 dar, wobei erkennbar ist, daß beide Werkzeuge zur Rohrlängsachse 13 geneigt sind, und zwar beide um einen Winkel γ, der beim links dargestellten Werkzeug 8 erkennbar ist. Die Neigung des Werkzeuges 9 erfolgt im gleichen Winkel konzentrisch zur Rohrlängsachse 13 senkrecht zur Zeichnungsebene. Die bei 14 und 15 gelagerten Werkzeuge 8, 9 sind als Innenfräser ausgebildet und mit am Innenumfang verteilt angeordneten Schneidplatten 16 versehen, mit denen die Umfangsfläche des Werkstückes 5 gefräst wird. Der Innenradius zwischen den Schneidplatten 16 und die Neigung γ des Werkzeuges 8 bzw. 9 sind so gewählt, daß beim Umlaufen der Werkzeuge 8, 9 um das Werkstück 5 jeweils die Schneidplatten 16 gegenüberliegender Werkstückbereiche bearbeitet werden. Dadurch, daß die Neigungen der Werkzeugebenen beider Werkzeuge in um 90 Grad zueinander versetzten Richtungen eingestellt sind, werden gleichzeitig vier Umfangsbereiche des Werkstückes 5 bearbeitet. Wenn, wie vorgesehen, der Innendurchmesser zwischen den Schneidplatten 16 nur geringfügig größer als der Außendurchmesser des Werkstückes 5 ist, und die Neigung γ entsprechend klein gewählt ist, so ergibt sich ein leicht polygonartiger Querschnitt des Werkstückes 5, wobei die Übergänge zwischen den vier Polygonseiten sanft erfolgen. Ein derartig leicht polygonartig gefrästes Querschnittsprofil ist für die Weiterverarbeitung geeignet, d.h. die Tatsache, daß der Querschnitt des gefrästen Werkstückes 5 nicht kreisrund ist, ist unschädlich.

Wie vorstehend beschrieben, ist die Drehrichtung der Werkzeuge 8 und 9 entgegengesetzt gerichtet, so daß sich die Kräfte, die bestrebt sind, das Werkstück zu drehen, gegeneinander aufheben. Dadurch ist das Führen und Halten des Werkstückes relativ einfach. Der Antrieb der Werkzeuge erfolgt über das nicht dargestellte Getriebe mittels Stirnrädern 17, 18, die in Stirnverzahnungen 19, 20 an den Werkzeugen 8, 9 eingreifen; die Lagerungen 14 und 15 stützen sich gegen die Werkzeugträger 21 und 22 ab, die mit dem Schlitten 10 verbunden sind.

Zum exakten Bearbeiten der Oberfläche des Werkstückes 5 bei geringster Spanabnahme ist es erforderlich, das Werkstück exakt im Zentrum der umlaufenden Werkzeuge 8, 9 zu halten. Zu diesem Zweck ist auf der Einlaufseite der Vorrichtung die Führungsbuchse 24 vorgesehen, die aus 8 an der Werkstückoberfläche anliegenden und auf dessen Umfang verteilten Segmenten besteht. Im vorderen (rechten) Bereich der Buchse 24 ist diese am Außenumfang mit einem Konus versehen, der sich gegen einen entsprechend ausgebildeten Konus am Werkzeugträger 21 anlegt. Durch Verstellen der Buchse in Längsrichtung des Werkstückes 5 mit Hilfe einer nicht weiter beschriebenen Kolben-Zylinder-Einheit bei 25 können die Segmente der Buchse 24 gegen den Konus, der mit 26 bezeichnet ist, verschoben und dadurch gegen die Oberfläche des Werkstückes gespannt werden. Auf diese Weise läßt sich das Werkstück exakt mittig einstellen und führen, wobei die Klemmkräfte so gewählt sind, daß ein Vorschub des Werkstückes 5 bzw. des Schlittens 10 relativ zur Oberfläche des Werkstückes 5 möglich ist.

Auslaufseitig der erfindungsgemäßen Vorrichtung sind Abzugsrollen 27 vorgesehen, die die Klemm- und Haltestange 7 und/oder das Werkstück 5 führen und zu Beginn und zum Ende des Arbeitsvorganges das Werkstück ein- und ausziehen. Die Traggehäuse der Auszugsrollen 27 sind mit Abstreifern 28 versehen, die verhindern, daß Frässpäne zwischen die Oberfläche des Werkstückes 5 und die Abzugsrollen 27 gelangt und dort in das weiche Material eingedrückt werden.

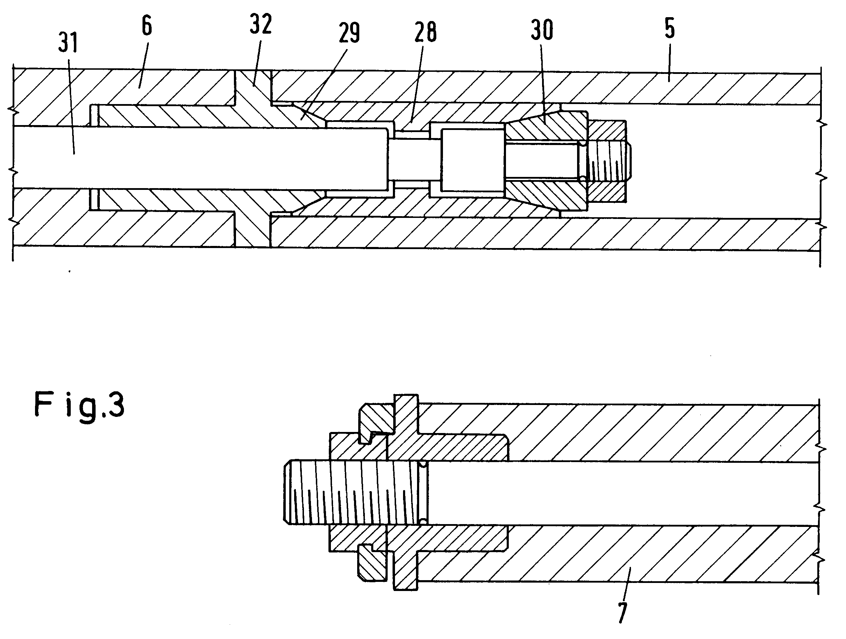

In Figur 3 ist das Prinzip der Klemm- und Haltestangen schematisch erläutert. Das Werkstück 5 wird auf die Klemm- und Haltestange 6 (links in Figur 1) aufgesteckt und mittels Spannsegmenten 28 über Konusflächen 29 und 30, die mit Hilfe der Zugstange 31 betätigt werden, am Innenumfang des Werkstückes 5 gespannt. Dadurch kann das Werkstück 5 sowohl in Umfangsrichtung drehfest über die Klemm- und Haltestange 6 gehalten, wie auch axial über das Zwischenteil 32 gegen die Stirnseiten des Werkstückes 5 geklemmt werden, ohne daß Klemm- und Haltemittel am Außenumfang des Werkstückes 5 angreifen müssen. Eine Bearbeitung des Werkstückes 5 ist dadurch bis an dessen Ende möglich.

Auf der anderen Seite des Werkstückes 5 greift die Klemm- und Haltestange 7 an, die in Figur 3 teilweise im unteren Bereich der Zeichnung dargestellt ist. Zwischen den Klemm- und Vorschubstangen 6 und 7 wird das Werkstück eingespannt, während der Schlitten 10 mit den Werkzeugen 8, 9 kontinuierlich über die Länge des Werkstückes verfährt. Die Führungsrollen 33 werden beim Vorschub des Schlittens jeweils ausgeschwenkt und nach passieren des Werkzeuges zurückgeschwenkt, um eine möglichst sichere Auflage zu erreichen.

Die Erfindung schafft mit nur zwei Fräswerkzeugen 8, 9 ein kompaktes Aggregat über die Werkstücklänge mit kurzen Abstützlängen zwischen den Führungsrollen 33. Abgesehen von den Vorschubkräften auf das Werkstück 5 ist das Verfahren kraftneutral, weil die in entgegengesetzten Richtungen umlaufenden Werkzeuge 8, 9 die Drehmomente gegeneinander aufheben. Das vereinfacht den Antrieb und kommt der Genauigkeit des Fräsverfahrens zu Gute, so daß mit ausgezeichneten Toleranzen zu rechnen ist. Die Bearbeitung des Werkstückes 5 mit zwei Werkzeugen gleichzeitig an vier gegenüberliegenden Umfangsbereichen steigert die Effektivität des Fräsverfahrens, so daß in kürzester Zeit mit nur einem Verfahrweg über die Länge des Werkstückes 5 die komplette Außenbearbeitung durchgeführt werden kann. Zur Einstellung der Spanabnahme für die Außenumfangsfläche des Werkstückes 5 lassen sich die Werkzeuge 8, 9 und/oder die Schneidplatten 16 einstellen, wobei eine automatisierte Einstellung denkbar ist. Dadurch, daß die Werkzeuge 8, 9 gegenläufig umlaufen, ist das Arretieren des Werkstückes gegen die Drehung weitgehend entbehrlich, lediglich beim Beginn des Bearbeitungsvorganges, wenn nur ein Werkzeug 8 oder 9 im Eingriff ist, müssen kurzzeitig Drehmomente gehalten werden. Dazu dienen die Klemm- und und Haltestangen 5, 6, die unterstützt werden durch die Buchse 24. Letztere sorgt für exakte Führung des Werkstückes im Bereich der Werkzeuge 8, 9, wobei es besonders günstig ist, daß die Buchse 24 bis nahe an die Schneidebene der Werkzeuge heranreicht. Der geringe Anstellwinkel der Werkzeuge 8, 9 gegenüber der Werkstückachse verursacht keine merklichen Verbiegungskräfte im Werkstück, zumal die Bearbeitung gleichzeitig auf zwei gegenüberliegenden Seiten des Werkstückes erfolgt. Aufzunehmen sind lediglich die in Werkstückmitte wirksamen Vorschubkräfte, die sich leicht mit ausreichender Steifigkeit übertragen lassen.

## Patentansprüche

1. Verfahren zum fräsenden Oberflächenbearbeiten von stranggegossenen Kupferluppen, bei dem das zu bearbeitende Werkstück an seinem Umfang und auf seiner Länge gefräst wird, während das Werkzeug und das Werkstück relativ zueinander kontinuierlich in Längsrichtung des Werkstückes bewegt werden, dadurch gekennzeichnet, daß mindestens zwei Innenfräswerkzeuge in zur Längsachse des Werkstückes geneigten Ebenen konzentrisch um das drehfestgehaltene Werkstück und in der Querebene der Zerspanung abgestützte Werkstück umläufen und mit ihren Schneiden gleichzeitig Vier gegenüberliegende Bereiche der Werkstückoberfläche spanend bearbeiten, und die beiden Ebenen in um 90 Grad zueinander versetzten Richtungen zur gemeisamen Werkstücklängsachse geneigt angeordnet sind.

2. Verfahren nach Anspruch 1
dadurch gekennzeichnet.
daß die Werkzeuge in entgegengesetzten Richtungen um die Werkstücklängsachse umlaufen.

3. Vorrichtung zum fräsenden Oberflächenbearbeiten von stranggegossenen Kupferluppen, bei der das zu bearbeitende Werkstück an seinem Umfang und auf seiner Länge gefräst wird, während das Werkzeug und das Werkstück relativ zueinander kontinuerlich in Längsrichtung des Werkstückes bewegt werden, dadurch gekennzeichnet, daß mindestens zwei als Innenfräse ausgebildete Werkzeuge (8, 9) deren Innendurchmesser zwischen den Werkzeugschneiden (16) geringfügig größer als der Außendurchmesser des zu fräsenden Werkstückes (5) ist, vorgesehen sind, das drehfest gehaltene Werkstück in der Querebene der Zerspanung abgestützt ist und die Werkzeuge in Zwei Ebenen in um 90 Grad zueinander versetzten Richtungen zur gemeinsamen Werkstücklängsachse geneigt angeordnet sind.

4. Vorrichtung nach Anspruch 3,
dadurch gekennzeichnet,
daß der Innendurchmesser einstellbar ist.

5. Vorrichtung nach Anspruch 3 und 4,
dadurch gekennzeichnet,
daß das auf Führungsrollen (33) auf liegende Werkstuck (5) beidseitig der Werkzeuge (8, 9) stirnseitig drehfest und axial mittels Klemm- und Haltestangen (6, 7) fixierbar ist.

6. Vorrichtung nach Anspruch 3 bis 5,
dadurch gekennzeichnet,
daß mindestens die Einlaufseite des Werkstückes (5) in die Werkzeuge (8, 9) als Führungsbüchse (24) für das Werkstück (5) ausgebildet ist, deren selbsttätig spielfrei einstellbare Führung das Werkstück (5) zentrisch führt.

7. Vorrichtung nach einem oder mehreren der vorhergehenden Ansprüche,
dadurch gekennzeichnet,
daß die aus den Werkzeugen (8, 9) und den Führungen für das Werkstück (5) bestehende Fräseinheit gegenüber dem Werkstück (5) in dessen Längsrichtung verfahrbar ist.

8. Vorrichtung nach einem oder mehreren der vorhergehenden Ansprüche,
dadurch gekennzeichnet,
daß das drehfest und axial eingespannte Werkstück (5) gegenüber den feststehenden Werkzeugen (8, 9) in Längsrichtung verfahrbar ist.

## Claims

1. A method for the milling surface processing of continuously cast copper ball lumps, in which the workpiece which is to be processed is milled on its periphery and on its length, whilst the tool and the workpiece are moved relative to each other continuously in longitudinal direction of the workpiece, characterised in that at least two internal milling tools revolve in planes inclined to the longitudinal axis of the workpiece concentrically around the workpiece, held so as to be secure with respect to rotation, and workpiece supported in the transverse plane of cutting, and with their edges processing in a cutting manner simultaneously four opposite regions of the workpiece surface, and the two planes are arranged in directions, staggered by 90 degrees with respect to eachother, inclined to the common longitudinal axis of the workpiece.

2. The method according to Claim 1,
characterised in that
the tools revolve in opposite directions around the longitudinal axis of the workpiece.

3. A device for the milling surface processing of continuously cast copper ball lumps, in which the workpiece which is to be processed is milled on its periphery and on its length, whilst the tool and the workpiece are moved relative to each other continuously in longitudinal direction of the workpiece, characterised in that at least two tools (8, 9), constructed as internal milling cutter, are provided, the internal diameter of which between the tool edges (16) is slightly greater than the external diameter of the workpiece (5) which is to be milled, the workpiece, held so as to be secure with respect to rotation, is supported in the transverse plane of the machining and the tools are arranged in two planes inclined in directions, staggered through 90 degrees with respect to each other, to the common longitudinal axis of the workpiece.

4. The device according to Claim 3,
characterised in that
the internal diameter is adjustable.

5. The device according to Claim 3 and 4,
characterised in that
the workpiece (5) resting on guide rollers (33) is able to be fixed on both sides of the tools (8, 9) on the end face so as to be secure with respect to rotation and axially by means of clamping- and holding rods (6, 7).

6. The device according to Claim 3 to 5,
characterised in that
at least the inlet side of the workpiece (5) into the tools (8, 9) is constructed as a guide bush (24) for the workpiece (5), the guide of which, which is automatically adjustable free of play, guides the workpiece (5) centrally.

7. The device according to one or more of the preceding claims,
characterised in that
the milling unit consisting of the tools (8, 9) and the guides for the workpiece (5) is movable with respect to the workpiece (5) in its longitudinal direction.

8. The device according to one or more of the preceding claims,
characterised in that
the workpiece (5) which is clamped so as to be secure with respect to rotation, and axially, is movable in longitudinal direction with respect to the feed tools (8, 9).

## Revendications

1. Procédé pour le traitement de surface par fraisage de loupes de cuivre obtenues par coulée continue, dans lequel la pièce à usiner est fraisée sur sa périphérie et sur sa longueur, tandis que l'outil et la pièce sont déplacés l'un par rapport à l'autre de façon continue en direction longitudinale de la pièce,
caractérisé en ce qu'au moins deux outils de fraisage internes tournent dans des plans inclinés par rapport à l'axe longitudinal de la pièce concentriquement autour de la pièce maintenue fixe en rotation et de la pièce supportée dans le plan transversal de l'enlèvement des copeaux et, par leurs arêtes de coupe, usinent simultanément quatre zones opposées de la surface de la pièce, et les deux plans sont agencés de facon inclinée dans des directions décalées l'une par rapport à l'autre de 90° par rapport à l'axe longitudinal commun des pièces.

2. Procédé selon la revendication 1,
caractérisé en ce que les outils tournent dans des sens opposés autour de l'axe longitudinal des pièces.

3. Dispositif pour le traitement de surface par fraisage de loupes de cuivre obtenues par coulée continue, dans lequel la pièce à usiner est fraisée à sa périphérie et sur sa longueur, tandis que l'outil et la pièce sont déplacés l'un par rapport à l'autre de façon continue en direction longitudinale de la pièce,
caractérisé en ce qu'au moins deux outils (8, 9) réalisés comme fraises internes, dont le diamètre interne entre les arêtes d'outil (16) est légèrement plus grand que le diamètre externe de la pièce (5) à fraiser, sont prévus, la pièce maintenue fixe en rotation est supportée dans le plan transversal de l'enlèvement des copeaux, et les outils sont agencés de façon inclinée dans deux plans dans des directions décalées l'une par rapport à l'autre de 90° par rapport à l'axe longitudinal commun des pièces.

4. Dispositif selon la revendication 3,
caractérisé en ce que le diamètre interne est réglable.

5. Dispositif selon les revendications 3 et 4,
caractérisé en ce que la pièce (5) reçue sur des galets de guidage (33) peut être fixée des deux côtés des outils (8, 9) de façon frontale, en rotation et axialement, au moyen de barres de maintien et de serrage (6, 7).

6. Dispositif selon les revendications 3 à 5,
caractérisé en ce qu'au moins le côté d'entrée de la pièce (5) dans les outils (8, 9) est réalisé comme douille de guidage (24) pour la pièce (5), dont le guide réglable sans jeu automatique guide de façon centrale la pièce (5).

7. Dispositif selon une ou plusieurs des revendications précédentes,
caractérisé en ce que l'unité de fraisage constituée des outils (8, 9) et des guides pour la pièce (5) est déplacable par rapport à la pièce (5) dans sa direction longitudinale.

8. Dispositif selon une ou plusieurs des revendications précédentes,
caractérisé en ce que la pièce (5) serrée en rotation et axialement est déplacable en direction longitudinale par rapport aux outils fixes (8, 9).
